Europäisches Patentamt

European Patent Office

Office européen des brevets

(19)

(11) Veröffentlichungsnummer: **0 072 045**
**A1**

(12) **EUROPÄISCHE PATENTANMELDUNG**

(21) Anmeldenummer: 82200840.5

(22) Anmeldetag: 06.07.82

(51) Int. Cl.³: **B 01 D 1/26,** B 01 D 3/06,
**C 12 F 3/10**

(30) Priorität: 04.08.81 DE 3130814

(43) Veröffentlichungstag der Anmeldung: 16.02.83
Patentblatt 83/7

(84) Benannte Vertragsstaaten: DE FR GB IT NL

(71) Anmelder: **METALLGESELLSCHAFT AG,**
**Reuterweg 14 Postfach 3724, D-6000 Frankfurt/M.1 (DE)**

(72) Erfinder: **Hohmann, Klaus, Dipl.-Ing., Waldstrasse 5,**
**D-6238 Hofheim 5 (DE)**
Erfinder: **Mai, Manfred, Atzelbergstrasse 4,**
**D-6000 Frankfurt am Main (DE)**

(74) Vertreter: **Fischer, Ernst, Dr., Reuterweg 14,**
**D-6000 Frankfurt am Main 1 (DE)**

(54) **Verfahren zur Konzentration von Schlempen.**

(57) In einem Verfahren zur Konzentration von Schlempen entspannt man die heisse Dünnschlempe mehrstufig (5), bevorzugt auf die höchstmögliche Temperatur, die durch den entsprechenden Druck der Verdampferstufe gegeben ist, und setzt die entstehenden Brüden zusätzlich zum Beheizen der Verdampferstufe (2) ein, während man die vorkonzentrierte Schlempe der Verdampferstufe mit dem niedrigsten Druck zuführt (VI). Die vorkonzentrierte Dünnschlempe wird im Gegenstrom in mehreren Verdampferstufen zu den Brüden geführt und hierbei weiter aufkonzentriert. Die Endkonzentration der Schlempen kann durch Entspannen (16) auf einen niedrigeren Druck erreicht werden.

**EP 0 072 045 A1**

METALLGESELLSCHAFT
Aktiengesellschaft
6000 Frankfurt/M. 1

27. Juli 1981
DRLA/LWÜ

0072045

Prov. Nr. 8635 LT

## Verfahren zur Konzentration von Schlempen

Die Erfindung betrifft ein Verfahren zur Konzentration von Schlempen in mehreren Stufen, wobei die einzudampfende Lösung entspannt und eingedampft wird.

Die übliche Schaltungsart beim Eindampfen von Flüssigkeiten mit höheren Eintrittstemperaturen in mehreren Stufen besteht darin, daß die Flüssigkeit zumindest teilweise im Gleichstrom zu den Brüden geführt wird.

Es ist ein Verfahren zum Eindampfen inkrustierender Flüssigkeiten, insbesondere Sulfitablaugen der Zellstoffindustrie, bekannt, wobei die Flüssigkeit im Kreislauf durch mehrere flüssigkeitsseitig hintereinandergeschaltete Erhitzer und anschließend durch eine Anzahl hintereinandergeschalteter Entspannungsstufen geführt wird, wobei das Temperaturgefälle zwischen den einzelnen Entspannungsstufen und zweckmäßig auch die Aufenthaltszeit der Flüssigkeit in der Entspannungseinrichtung so eingestellt werden, daß die Inkrustierungen bildenden Kristalle, Salze oder dergl., insbesondere auch die Calciumsalze, Gelegenheit haben zu wachsen (DE-PS 906 691).

Bei einem anderen Verfahren zum Eindampfen von Sulfit-Ablaugen oder anderen gipshaltigen Lösungen, bei dem die einzudampfende Lösung, zweckmäßig stufenweise, erhitzt und die erhitzte Lösung, zweckmäßig stufenweise, durch Entspannung eingedampft wird, wird vorgeschlagen, der erhitzten Lösung vor oder bei dem Beginn der Entspannung feinverteilten Gips zuzusetzen (DE-PS 851 900). Das einzudampfende Gut wird durch

0072045

mehrere Erhitzer geführt, in denen nur erhitzt, aber nicht
eingedampft wird.

Diese bekannten Verfahren haben den Nachteil, daß sie sehr
energieaufwendig sind und hohe Investitionskosten erfordern.

Der Erfindung liegt die Aufgabe zugrunde, diese und andere
Nachteile zu vermeiden und ein Verfahren zur Verfügung zu
stellen, das energiesparend ist und ermöglicht, den bisherigen Dampfverbrauch herabzusetzen. Das Verfahren soll einfach
sein und wenig Überwachung erfordern.

Diese Aufgabe wird erfindungsgemäß dadurch gelöst, daß man
die heiße Dünnschlempe mehrstufig entspannt, daß man die entstehenden Brüden zusätzlich zum Beheizen der Verdampferstufen
einsetzt und die vorkonzentrierte Schlempe der Verdampferstufe
mit dem niedrigsten Druck zuführt.

Nach einer Weiterbildung der Erfindung führt man dann die
durch die mehrstufige Entspannung vorkonzentrierte Dünnschlempe
in mehreren Verdampferstufen im Gegenstrom zu den Brüden und
konzentriert sie weiter.

Nach einer weiteren Ausgestaltung der Erfindung entspannt man
die heiße Dünnschlempe auf die höchstmögliche Temperatur, die
durch den entsprechenden Druck der Verdampferstufe gegeben ist.

Im Rahmen der Erfindung wählt man als höchstmögliche Temperatur
eine Temperatur von 80 bis 110 $^\circ$C.

In einer weiteren vorteilhaften Ausgestaltung der Erfindung
bringt man die aufkonzentrierte Schlempe durch Entspannen auf
einen niedrigeren Druck auf die Endkonzentration.

Die mit der Erfindung erzielten Vorteile bestehen insbesondere
darin, daß der Dampfverbrauch wesentlich geringer ist als bei den herkömmlichen Verfahren. Es können Ersparnisse bis zu
25 % erzielt werden. Dabei fällt das Brüdenkondensat mit
geringer Temperatur an und kann unmittelbar in der Fermentation eingesetzt werden. Es gelingt somit mit einem einfachen Verfahren, Schlempen einzudampfen, ohne daß Verkrustungen auf der Heizfläche entstehen. Das Verfahren
ermöglicht gute Wärmeübergänge, da das Temperaturniveau der
einzudampfenden Flüssigkeit hochgehalten wird und die Lösung
aufgrund ihrer niedrigen Viskosität leicht gefördert und
gehandhabt werden kann.

Weiterhin tritt bei der vorgeschlagenen Gegenstromführung
die geringstmögliche Menge an Kristallen auf, wodurch die Verkrustungsgefahr ebenfalls herabgesetzt wird. Ein weiterer
Vorteil besteht darin, daß die Endkonzentration der Schlempe
durch Entspannung auf eine niedrigere Temperatur erreicht
wird. Dadurch kommen die zusätzlich ausfallenden Kristalle
nicht mit Heizflächen in Berührung, wie dies bei Verfahren
mit Gleichstromführung der Fall ist.

Die Erfindung ist in den Zeichnungen schematisch und beispielsweise dargestellt und wird im Folgenden näher beschrieben.

Fig. 1  zeigt eine aus sechs Stufen bestehende Eindampfanlage mit vierfacher Entspannung der Dünnlauge;

Fig. 2 zeigt die gleiche Eindampfanlage mit fünffacher
        Entspannung der Dünnlauge.

Es bedeuten:

I bis VI die Stufen der Eindampfanlage; 1 Verdampfer, 2 Heizkörper; 3 Umwälzpumpe; 4 Pumpe; 5 Mehrstufen-Entspanner;
6, 7, 8, 9 und 10 Rohrleitungen für Entspannungsbrüden in die
Verdampferstufen; 11, 12, 13, 14 und 15 Pumpen; 16 Dicklaugenentspanner; 17 Pumpe; 18 Rohrleitung für Entspannungsbrüden; 19 Oberflächen-Kondensator; 20 Rohrleitung für Frisch-

dampf; <u>21</u> Vakuumpumpe zum Absaugen nicht kondensierbarer Gase; <u>22</u> Leitung für Zufuhr von Kühlwasser; <u>23</u> Leitung für Abzug von Kühlwasser; <u>24</u>, <u>25</u>, <u>26</u> und <u>27</u> Kondensat-Entspanner; <u>28</u> Pumpe zur Entfernung von Brüdenkondensat; <u>29</u> Mehrstufen-Entspanner und <u>30</u> Pumpe zum Abzug von Frischdampf-Kondensat.

<u>Beispiel 1</u>

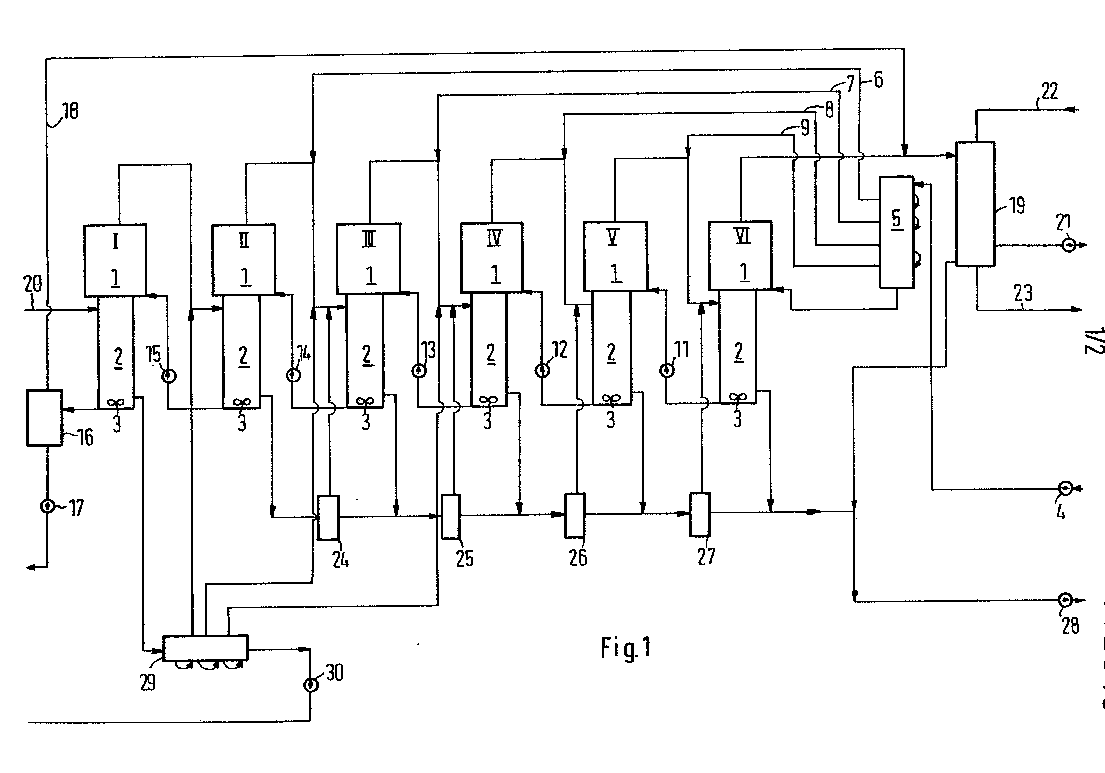

Die Eindampfanlage gemäß Fig. 1 besteht aus sechs Stufen I bis VI. Jede Stufe besteht aus einem Verdampfer 1 und einem Heizkörper 2. Als Verdampfer-Prinzip ist Zwangsumwälzung vorgesehen, wobei die Vinasse-Schlempe mittels eingebauten Umwälzpumpen 3 durch Heizrohre umgewälzt wird.

29.018 kg/h Dünnvinasse-Schlempe mit 9 % TS und 100 $^{\circ}$C, die aus der Alkohol-Destillation stammt, werden mit der Pumpe 4 in einen Mehrstufen-Entspanner gepumpt. In diesem Entspanner 5 wird die Schlempe auf den Druck der entsprechenden Verdampferstufen entspannt. Die angefallenen Entspannungsbrüden werden über Rohrleitungen 6, 7, 8 und 9 den entsprechenden Verdampferstufen zugeführt und somit mehrfach zum Beheizen verwendet. Die Temperaturstufen der Entspannungsbrüden belaufen sich auf:

in Rohrleitung 6      86,5 $^{\circ}$C
in Rohrleitung 7      76,5 $^{\circ}$C
in Rohrleitung 8      67,5 $^{\circ}$C
in Rohrleitung 9      58,7 $^{\circ}$C

Aus dem Entspanner 5 fließen dann 27.060 kg/h Schlempe mit 59 $^{\circ}$C und 9,65 % TS in die Stufe VI und werden von dort weiter mittels einer Pumpe 11 in die Stufe V, von dort mittels einer Pumpe 12 in die Stufe IV, von dort mittels einer Pumpe 13 in die Stufe III, von dort mittels einer Pumpe 14 in die Stufe II, von dort mittels einer Pumpe 15 in die Stufe I und weiter in den Dicklaugen-Entspanner 16 geführt.

In diesem Entspanner 16 fällt die konzentrierte Schlempe mit einer Temperatur von 62 $^{\circ}$C und 65 % TS an. Aus dem Entspanner 16 werden 4.018 kg/h Dickschlempe mit der Pumpe 17 abgezogen. Die Wasserverdampfungsleistung beträgt somit 25 t/h. Die Entspannungsbrüden aus dem Entspanner 16 werden über eine Rohrleitung 18 dem Oberflächen-Kondensator 19 zugeführt.

Zum Beheizen des Heizkörpers 2 der Stufe I werden 3.680 kg/h Frischdampf, mit 120 $^{\circ}$C gesättigt, über die Rohrleitung 20 zugegeben. Die in den einzelnen Stufen anfallenden Brüden dienen zum Beheizen der nachfolgenden Stufen. Die Brüden der Stufe VI werden in einem Oberflächen-Kondensator 19 bei 50 $^{\circ}$C kondensiert. Die nicht kondensierbaren Gase werden mit einer Vakuumpumpe 21 abgesaugt, wodurch ein Druck von 90 Torr in der Stufe VI aufrechterhalten wird. Zur Kondensation der Brüden im Oberflächen-Kondensator 19 werden 116 m$^3$/h Kühlwasser von 18 auf 450 $^{\circ}$C aufgewärmt. Das Kühlwasser wird über die Rohrleitung 22 zu- und über die Rohrleitung 23 abgeführt.

Das in den Heizkörpern 2 der Stufen II bis V anfallende Brüdenkondensat wird kontinuierlich über Kondensat-Entspanner 24 bis 27 geleitet und entspannt. Die anfallenden Entspannungsbrüden dienen zum Beheizen der entsprechenden Stufe. Insgesamt werden 23.500 kg/h Brüdenkondensat mit 56,5 $^{\circ}$C mit einer Pumpe 28 aus der Anlage weggefördert.

Das im Heizkörper 2 der Stufe I anfallende Frischdampfkondensat wird ebenfalls in einem Mehrstufen-Entspanner 29 dreimal entspannt. Die anfallenden Brüden werden der entsprechenden Stufe zum Beheizen zugeführt. Stündlich werden 3.380 kg Frischdampfkondensat mit einer Temperatur von 77 $^{\circ}$C über die Pumpe 30 aus dem Entspanner 29 abgezogen.

Beispiel 2

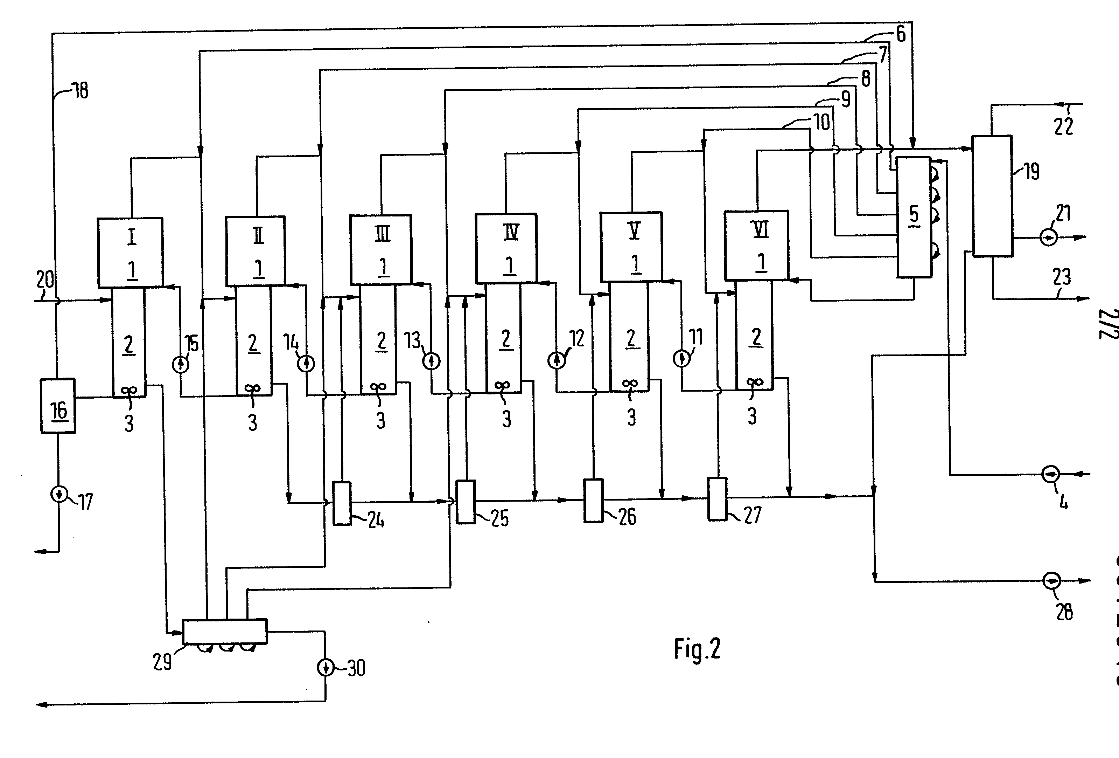

Wie bei Beispiel 1, besteht die Eindampfanlage nach Fig. 2 aus sechs Stufen I bis VI, wobei wieder jede Stufe aus dem Verdampfer 1 und einem Heizkörper 2 besteht. Als Verdampfer-Prinzip ist ebenfalls Zwangsumwälzung vorgesehen. Die Vinasse-Schlempe wird dabei mittels eingebauter Umwälzpumpen 3 durch Heizrohre umgewälzt.

32.950 kg/h Vinasse-Schlempe mit 12,8 % TS und 116 $^{\circ}$C, die aus der Alkohol-Destillation stammen, werden mit der Pumpe 4 in einen Mehrstufen-Entspanner 5 gefördert. In diesem Entspanner 5 wird die Schlempe fünffach entspannt. Die anfallenden Entspannungsbrüden werden über die Rohrleitungen 6, 7, 8, 9 und 10 den entsprechenden Verdampferstufen zugeführt und zum Beheizen verwendet. Die Temperaturen der Entspannungsbrüden betragen:

| | |
|---|---|
| in Rohrleitung 6 | 96,6 $^{\circ}$C |
| in Rohrleitung 7 | 84,6 $^{\circ}$C |
| in Rohrleitung 8 | 74,9 $^{\circ}$C |
| in Rohrleitung 9 | 66,1 $^{\circ}$C |
| in Rohrleitung 10 | 57,9 $^{\circ}$C |

Aus dem Entspanner 5 fließen dann 29.940 kg/h Schlempe mit 59,1 °C und 14,1 % TS in die Stufe VI und werden von dort weiter mittels einer Pumpe 11 in die Stufe V, von dort mittels einer Pumpe 12 in die Stufe IV, von dort mittels einer Pumpe 13 in die Stufe III, von dort mittels einer Pumpe 14 in die Stufe II, von dort mittels einer Pumpe 15 in die Stufe I und weiter in den Dicklauge-Entspanner 16 gefördert.

In diesem Entspanner 16 fällt die konzentrierte Schlempe mit einer Temperatur von 62 °C und 65 % TS an. Mit der Pumpe 17 werden dann aus dem Entspanner 16 6.500 kg/h konzentrierte Schlempe abgezogen. Die Wasserverdampfungsleistung beträgt somit 26.450 kg/h. Die Entspannungsbrüden aus dem Entspanner 16 werden über eine Rohrleitung 18 dem Oberflächen-Kondensator 19 zugeführt.

Zum Beheizen des Heizkörpers 2 der Stufe I werden 2.990 kg/h Frischdampf mit 115 °C, gesättigt, über die Rohrleitung 20 zugegeben. Die in den einzelnen Stufen anfallenden Grüden dienen zum Beheizen der nachfolgenden Stufen. Die Brüden der Stufe VI werden in einem Oberflächen-Kondensator 19 bei 50 °C kondensiert. Die nicht kondensierbaren Gase werden mit einer Vakuumpumpe 21 abgesaugt, so daß ein Druck von 90 Torr in der Stufe VI aufrechterhalten wird. Zur Kondensation der Brüden im Oberflächen-Kondensator 19 werden 169 m$^3$/h Kühlwasser von 25 auf 45 °C aufgewärmt. Das Kühlwasser wird über die Rohrleitung 22 zu- und über die Rohrleitung 23 abgeführt.

Das in den Heizkörpern 2 der Stufen II bis V anfallende Brüdenkondensat wird kontinuierlich in Kondensat-Entspannern 24 bis 27 entspannt. Die dabei anfallenden Brüden dienen zum Beheizen der entsprechenden Stufe. Insgesamt werden 2.760 kg/h Brüdenkondensat mit 56,2 °C mit einer Pumpe 28 aus der Anlage weggefördert.

Das im Heizkörper 2 der Stufe I anfallende Frischdampfkondensat wird in einem Mehrstufen-Entspanner 29 dreimal entspannt. Die anfallenden Brüden werden der entsprechenden Stufe zum Beheizen zugeführt. Stündlich werden 2.780 kg Frischdampfkondensat mit einer Temperatur von 75 $^\circ$C über die Pumpe 30 aus dem Entspanner 29 abgezogen.

Patentansprüche

1. Verfahren zur Konzentration von Schlempen in mehreren Stufen, wobei die einzudampfende Lösung entspannt und eingedampft wird, dadurch gekennzeichnet, daß man die heiße Dünnschlempe mehrstufig entspannt, daß man die entstehenden Brüden zusätzlich zum Beheizen der Verdampferstufen einsetzt und die vorkonzentrierte Schlempe der Verdampferstufe mit dem niedrigsten Druck zuführt.

2. Verfahren nach Anspruch 1, dadurch gekennzeichnet, daß man die durch mehrstufige Entspannung vorkonzentrierte Dünnschlempe in mehreren Verdampferstufen im Gegenstrom zu den Brüden führt und weiter aufkonzentriert.

3. Verfahren nach Anspruch 1 und 2, dadurch gekennzeichnet, daß man die heiße Dünnschlempe auf die höchstmögliche Temperatur, die durch den entsprechenden Druck der Verdampferstufe gegeben ist, entspannt.

4. Verfahren nach einem oder mehreren der vorhergehenden Ansprüche 1 bis 3, dadurch gekennzeichnet, daß man als höchstmögliche Temperatur eine Temperatur von 80 bis 110 $^{\circ}$C wählt.

5. Verfahren nach einem oder mehreren der vorhergehenden Ansprüche 1 bis 4, dadurch gekennzeichnet, daß man die aufkonzentrierte Schlempe durch Entspannen auf einen niedrigeren Druck auf die Endkonzentration bringt.

Fig.1

1/2

0072045

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 01 D 1/26 |
| X | US-A-3 428 107 (E.H. BACKTEMAN) * Spalte 1, Zeilen 22-25, 50-67; Spalte 2, Zeilen 18-49; Spalte 3, Zeilen 31-38; Figuren 1,2 * | 1 | B 01 D 3/06 C 12 F 3/10 |
| | --- | | |
| A | FR-A-1 090 781 (METALLGESELLSCHAFT) * Seite 2, linke Spalte, Absatz 3 - rechte Spalte, Absatz 6; Figur * | 1 | |
| | --- | | |
| A | DE-A-1 619 718 (P. LAGUILHARRE) * Seite 2, Absatz 2 - Seite 3, Absatz 2; Seite 4, Absatz 3 - Seite 8; Figur * | 1,2 | |
| | --- | | RECHERCHIERTE SACHGEBIETE (Int. Cl. ³) |
| A | US-A-3 494 836 (F.C. STANDIFORD) * Spalte 2, Zeile 24 - Spalte 3, Zeile 36; Figur 1 * | 1,2 | |
| | --- | | B 01 D |
| A | US-A-4 054 493 (P.S. ROLLER) * Spalte 2, Zeilen 11-15; Spalte 3, Zeile 31 - Spalte 5, Zeile 62 * | 1,3 | C 12 F D 21 C |
| | --- | | |
| A | US-A-3 303 106 (F.C. STANDIFORD) * Spalte 6, Zeilen 7-29; Figur 2 * | 5 | |
| | --- -/- | | |

Der vorliegende Recherchenbericht wurde für alle Patentansprüche erstellt.

| Recherchenort DEN HAAG | Abschlußdatum der Recherche 03-11-1982 | Prüfer VAN BELLEGHEM W.R. |
|---|---|---|

Europäisches Patentamt

**EUROPÄISCHER RECHERCHENBERICHT**

0072045

Nummer der Anmeldung

EP 82 20 0840

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 914 542 (J.J. CIBOIT)<br>* Seite 9, Absatz 2; Figur 1 * | 5 | |
| A | DE-A-2 930 545<br>(METALLGESELLSCHAFT)<br>* Seite 7, Zeilen 7-11; Figur 1 * | 5 | |
| A | US-A-3 704 101 (C.J. KELLY)<br>* Zeichnung 3 * | 2 | |
| A | US-A-3 986 938 (C.S. SMITH, Jr.) | | |
| A | US-A-3 515 646 (P.T. WALKER) | | |

RECHERCHIERTE SACHGEBIETE (Int. Cl. 3)

Der vorliegende Recherchenbericht wurde für alle Patentansprüche erstellt.

| Recherchenort<br>DEN HAAG | Abschlußdatum der Recherche<br>03-11-1982 | Prüfer<br>VAN BELLEGHEM W.R. |
|---|---|---|